# EUROPÄISCHE PATENTSCHRIFT

(11) **EP 2 931 553 B1**
(45) Veröffentlichungstag und Bekanntmachung des Hinweises auf die Patenterteilung: **18.10.2017**
(21) Anmeldenummer: 13789228.7
(22) Anmeldetag: 30.10.2013
(51) Int. Cl.: B60M 1/24

(54) **STROMSCHIENE**
BUSBAR
RAIL D'ALIMENTATION

(30) Priorität: 02.11.2012 DE 102012021358
(43) Veröffentlichungstag der Anmeldung: 21.10.2015
(73) Patentinhaber: Furrer + Frey AG, 3005 Bern (CH)
(72) Erfinder: FURRER, Beat, CH-3012 Bern (CH)
(74) Vertreter: von Bülow & Tamada
(86) Internationale Anmeldenummer: PCT/EP2013/072695
(87) Internationale Veröffentlichungsnummer: WO 2014/067989

(56) Entgegenhaltungen:
- EP-A1- 0 593 350
- DE-A1-102009 022 963
- DE-A1-102011 006 308
- DE-U1-202004 009 420

## Beschreibung

Die Erfindung bezieht sich auf eine Stromschiene zur Halterung eines Fahrdrahtes für elektrisch angetriebene Fahrzeuge.

Eine solche Stromschiene ist aus der EP 0 593 350 bekannt. Diese Stromschiene hat ein langgestrecktes, einstückiges, in Längsrichtung geschlitztes Profil mit einem Querträger, von dem zwei Spannarme im wesentlichen senkrecht abstehen. Am Ende jedes Spannarmes ist ein Klemmarm angebracht, der unter einem spitzen Winkel zu einer Symmetrieachse verläuft. Die Spannarme und/oder die Klemmarme sind federelastisch ausgebildet, so dass der Fahrdraht ausschliesslich durch die Federkraft der Spannarme und/oder der Klemmarme gehalten ist. Zum Abfluss von Kondenswasser weist zumindest ein Klemmarm nahe seiner Spitze eine Bohrung auf.

DE 10 2009 022 963 A1 zeigt ein ähnliches Profil einer Stromschiene, das nahe der Spitzen der Klemmarme ein Paar von Ausnehmungen hat.

DE 20 2004 009 420 U1 zeigt ein ähnliches Profil einer Stromschiene, jedoch ohne Bohrungen.

Die JP H10-226249 A schlägt vor, Stromschienen vor Korrosion durch Wasser dadurch zu schützen, dass beidseitig des Stromschienenprofils aus Kunststoff bestehende flexible Abdeckungen vorgesehen sind. Diese Abdeckungen können zwar die Stromschiene vor Wasser schützen, das von oben oder seitlich kommt, jedoch nicht gegen Kondenswasser des gattungsbildenden Stromschienenprofils.

Die US-A-3,985,211 zeigt eine Stromschiene, mit in deren Profil hineinragenden Fortsätzen, die der Stabilität in Verbindung mit einem Federelement dienen.

Aufgabe der Erfindung ist es daher, die Stromschiene der eingangs genannten Art dahingehend zu verbessern, dass sie gegen Korrosion besser geschützt ist.

Diese Aufgabe wird durch die im Patentanspruch 1 angegebenen Merkmale gelöst. Vorteilhafte Ausgestaltungen und Weiterbildungen der Erfindung sind den Unteransprüchen zu entnehmen.

Grundidee der Erfindung ist es, an den Klemmarmen Schutzwände anzubringen, die in das Profil der Stromschiene hineinragen und mit den Klemmarmen je einen Kanal bilden, wobei die Bohrungen unmittelbar angrenzend an Seitenwände der Schutzwände angrenzen.

Vorzugsweise werden an beiden gegenüberliegenden Klemmarmen entsprechende Bohrungen vorgesehen und zwar vorzugsweise quer zur Längserstreckung der Stromschiene einander gegenüberliegende Paare von Bohrungen und weiter vorzugsweise über die Gesamtlänge der jeweiligen Stromschiene verteilt drei solcher Paare von Bohrungen.

Vorzugsweise verläuft die Längsachse der Bohrungen rechtwinklig zur Aussenseite des jeweiligen Klemmarmes.

Nach einer Weiterbildung der Erfindung verlaufen die Schutzwände in etwa rechtwinklig zu den Klemmarmen und bilden damit an beiden Klemmarmen einen längs der Stromschiene verlaufenden Kanal, wobei die Bohrung in den Klemmarmen unmittelbar an eine Seitenfläche der Schutzwände angrenzen. Dadurch wird erreicht, dass auftretendes Kondenswasser in diesen beiden Kanälen gesammelt wird und durch die Bohrungen abfliessen kann. Damit kann praktisch kein Wasser zwischen die Klemmarme und den eingespannten Fahrdraht gelangen.

Im folgenden wird die Erfindung anhand von Ausführungsbeispielen im Zusammenhang mit der Zeichnung ausführlicher erläutert. Es zeigt:
- Fig. 1: einen Querschnitt einer bekannten Stromschiene;
- Fig. 2: eine vergrösserte Ansicht der Klemmarme der Fig. 1;
- Fig. 3: einen Querschnitt einer Stromschiene nach einem Ausführungsbeispiel der Erfindung;
- Fig. 4: eine vergrösserte Ansicht der Klemmarme der Stromschiene der Fig. 3; und
- Fig. 5: eine Seitenansicht einer Stromschiene nach der Erfindung.

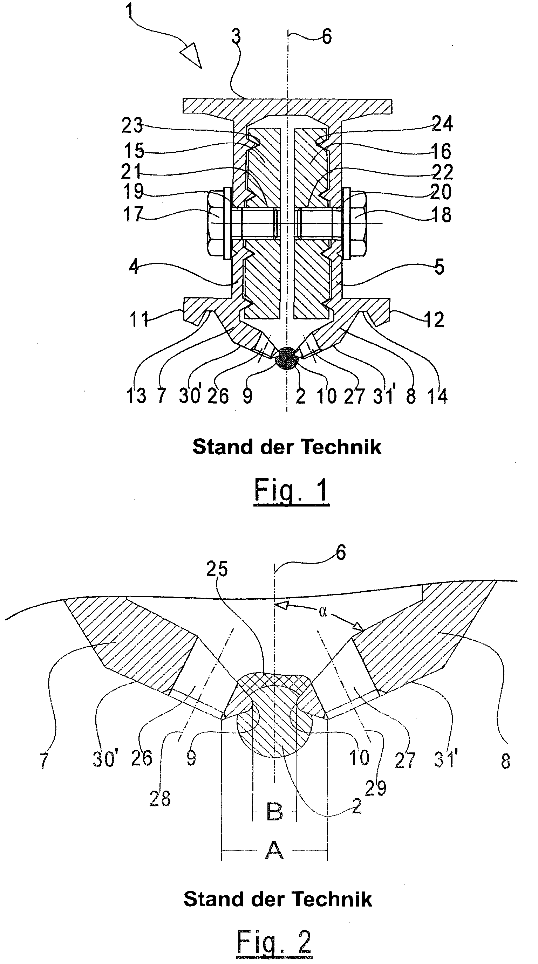

Die Fig. 1 zeigt eine Stromschiene 1, die ein längsgeschlitztes Querschnittsprofil aufweist, in das ein Fahrdraht 2 eingelegt und dort formschlüssig gehalten ist. Die Stromschiene 1 hat einen plattenförmigen Querträger 3 mit einer ebenen Oberfläche, von der zwei Spannarme 4 und 5, die spiegelsymmetrisch zu einer Symmetrieachse 6 liegen, im wesentlichen senkrecht abstehen. Ausgehend von dem Querträger 3 sind die Spannarme 4 und 5 leicht spitz zulaufend ausgebildet, wobei der Winkel zwischen Innen- und Aussenfläche der Spannarme etwa 1,5° beträgt. An den freien Enden der Spannarme 4 und 5 sind jeweils Klemmarme 7 und 8 angebracht, die gegenüber der Symmetrieachse 6 unter einem spitzen Winkel α von den Spannarmen 4 und 5 abstehen und aufeinanderzu verlaufen. Die Klemmarme 7 und 8 weisen jeweils eine Spitze 9, 10 auf, die in entsprechend geformte Rillen des Fahrdrahtes 2 eingreifen. Die Rillen sind dabei oberhalb einer durch die Mittelachse des Fahrdrahtes verlaufenden Ebene angeordnet.

Am Übergangsbereich zwischen den Spannarmen 4 bzw. 5 und den Klemmarmen 7 bzw. 8 sind seitliche, von der Symmetrieachse 6 fortweisende Kragarme 11 und 12 angebracht, deren zum Querträger 3 weisende Oberseite eben ist und deren vom Querträger 3 fortweisende Unterseite eine Ausnehmung bzw. Rille 13 bzw. 14 aufweist, die als Führung für eine bewegliche Fahrdrahteinlegevorrichtung dient, welche die Spann- und Klemmarme zum Einlegen des Fahrdrahtes auseinanderspreizt.

Der Querträger 3 ragt beidseitig seitlich über die Spannarme 4 und 5 hinaus und ist im Übergangsbereich zu den Spannarmen über Schrägen verdickt ausgebildet.

Die Stromschiene 1 bildet insgesamt ein weitestgehend geschlossenes und nur durch einen Längsschlitz für die Aufnahme des Fahrdrahtes unterbrochenes Kastenprofil, das den Fahrdraht hält. Das Profil als Ganzes ist in hohem Maße biege- und verwindungssteif, wobei die Spann- und Klemmarme in geringem Umfang federelastisch in Bezug auf die Symmetrieachse 6 hin und her bewegt werden können, um den Fahrdraht 2 einzulegen oder auszuwechseln. Andererseits ist auch diese Bewegungsmöglichkeit durch die Formgebung, Dimensionierung und Materialbeschaffenheit so eingeschränkt, dass der Fahrdraht 2 sicher gehalten wird und auch bei mechanischen Belastungen durch den Stromabnehmer eines Fahrzeuges sicher gehalten ist.

Die gesamte Stromschiene 1 ist als einstückiges Profil ausgebildet, das im Strangziehverfahren hergestellt werden kann. Als Material wird beispielsweise Aluminium oder eine Aluminiumlegierung verwendet, das bzw. die gute elektrische Leitfähigkeit haben, so dass die Stromeinspeisung zum Fahrdraht auch über die Stromschiene 1 erfolgen kann.

Aus Gründen des Transportes, der Handhabbarkeit und der Montage haben Stromschienen auf einer Strecke einer Länge von maximal 10 bis 12 m. Für eine Strecke werden dann mehrere Stromschienen stirnseitig aneinander stossend miteinander verbunden, was durch Stosslaschen 15, 16 erfolgt, die in das Innere des Stromschienenprofils eingesetzt werden und die Stoßstelle zwischen zwei benachbarten Stromschienen überbrücken. Selbstverständlich ist es auch möglich, die Stosslaschen an der Aussenseite der Spannarme anzubringen.

In Fig. 1 sind zwei solcher Stosslaschen 15, 16 gezeigt, die generell ein rechteckiges Profil haben und an einem zugeordneten Spannarm befestigt werden. Die Länge der Stosslaschen 15, 16 liegt in der Grössenordnung von 40cm. Die Stosslaschen dienen sowohl der elektrischen Verbindung zwischen zwei benachbarten Stromschienenprofilen als auch zur Übertragung mechanischer Kräfte. Die Stosslaschen sind durch Schrauben 17, 18, die durch Bohrungen 19, 20 der Spannarme 4, 5 hindurchragen und in Gewindebohrungen 21, 22 der Stosslaschen 15, 16 eingeschraubt werden, befestigt. Pro Stosslasche benötigt man nur zwei bis vier Schrauben, die beidseitig eines Stromschienenstosses an benachbarte Stromschienen angeschraubt werden.

Aufgrund eines Lochspieles der Bohrungen 19, 20 könnte eine kleine, aber trotzdem ungünstige Auslenkung der Stromschienenachsen auftreten, wodurch sich an der Stoßstelle ein Knick ergeben kann. Ein solcher Knick hat einen negativen Einfluss auf die Stromabnahme, da der Stromabnehmer dort ausgelenkt wird, somit nicht kontinuierlich am Fahrdraht 2 schleifen kann, womit sich Kontaktkräfte zwischen Stromabnehmer und Fahrdraht vergrössern bzw. verkleinern und die Gefahr besteht, dass der Stromabnehmer vom Fahrdraht springt, die Kraft verliert und damit auch die Stromzufuhr. Diese mechanisch-geometrischen und elektrischen Nachteile können für eine Hochgeschwindigkeitsdeckenstromschiene nicht in Kauf genommen werden. Zu diesem Zweck wird neben der Schraubverbindung zusätzlich eine formschlüssige Verbindung zwischen den Stromschienen und den Stosslaschen realisiert und zwar im Prinzip mit einer Nut- und Federverbindung.

Zu diesem Zweck sind an den Spannarmen 4 und 5 Vorsprünge 23, 24 angebracht, die in entsprechende Ausnehmungen der Stosslaschen eingreifen und somit in Bezug auf eine Durchbiegung eine formschlüssige und biegesteife Verbindung schaffen. Die Stosslaschen können an den Innenseiten und/oder den Aussenseiten der Spannarme liegen. Die Vorsprünge können das in Fig. 1 gezeigte Dreiecksprofil haben. Sie können aber auch andere Formen haben, wie z.B. trapezförmig oder rechteckig. Durch ein dreieckiges oder trapezförmiges Profil erreicht man eine Keilwirkung, die sicherstellt, dass immer eine fest sitzende Verbindung der Nut- und Federverbindung stattfindet, selbst wenn bei der Fertigung der Vorsprünge und/oder der Nuten ein gewisses Spiel vorhanden ist. Selbstverständlich können die Vorsprünge und Ausnehmungen auch vertauscht werden, so dass die Vorsprünge an den Stosslaschen und die Ausnehmungen an den Spannarmen angebracht sind.

Vor dem Einlegen des Fahrdrahtes in das Stromschienenprofil werden dessen Nuten lückenlos und kontinuierlich mit einem Graphitfett aufgefüllt. Durch das Klemmen des Fahrdrahtes an den Spitzen 9 und 10 der Klemmarme 7 und 8 wird das Fett aus den Nuten gepresst und teilweise auch nach oben verdrängt, was in Fig. 2 durch eine gemusterte Fläche 25 angedeutet ist.

Damit ist das Stromschienenprofil nach aussen hin weitestgehend abgedichtet. Jedoch kann sich im Inneren des Stromschienenprofils Kondenswasser bilden, das eine Korrosion begünstigt. Zur Lösung dieses Problems schlägt die Erfindung vor, an den Klemmarmen 7 und 8 Bohrungen 26, 27 vorzusehen, die nahe den Spitzen 9 und 10 der Klemmarme angeordnet sind. Die Mittelachse 28, 29 der Bohrungen verläuft vorzugsweise senkrecht zur Aussenfläche 30', 31' der Klemmarme 7, 8.

Geht man davon aus, dass das erwähnte Graphitfett beim Einlegen des Fahrdrahtes auch in das Innere des Profiles gedrückt wird, so grenzen dessen Ränder an die Bohrungen 26, 27 an und Kondenswasser fliesst über diese Bohrungen ab, ohne an den Klemmbereich des Fahrdrahtes zu gelangen.

In einem konkreten Beispiel haben die Bohrungen einen Durchmesser von 8mm und der Abstand A der nächst gelegenen Wände der Bohrungen gemessen an den Aussenflächen 30', 31' der Klemmarme 7 und 8 beträgt etwa 12,4mm, bei einem Abstand B der Spitzen der Klemmarme von 4,8mm.

An den zu den Aussenflächen 30' und 31' der Klemmarme 7 und 8 weisenden Seiten der Bohrungen 26 und 27 sind Fasen vorgesehen, die beispielsweise einen Winkel von 45° haben. Die Tiefe der Fasen beträgt dann 0,8mm.

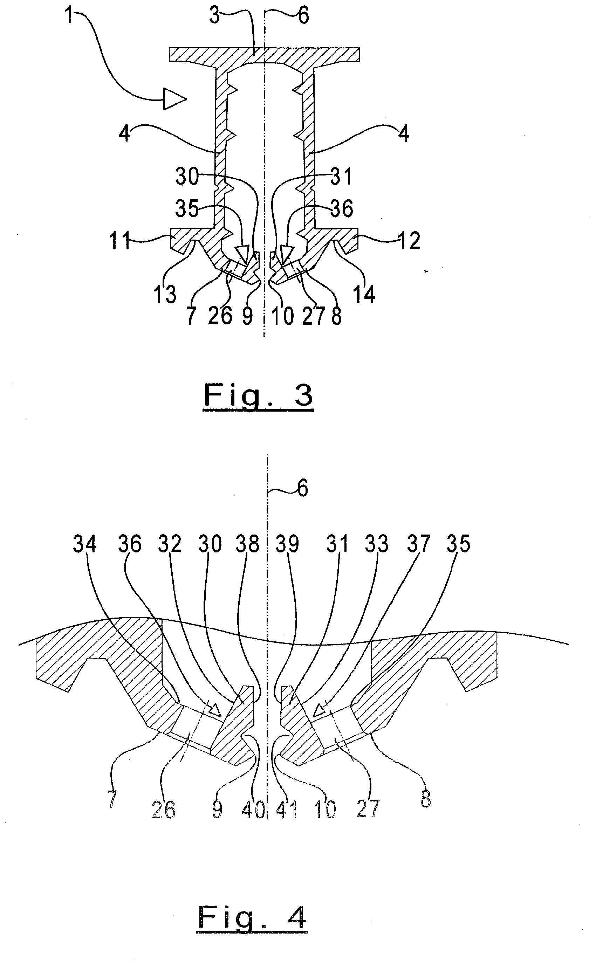

Nach einem Ausführungsbeispiel der Erfindung, das in den Fig. 3 und 4 gezeigt ist, sind an beiden Klemmarmen 7 und 8 unmittelbar angrenzend an deren Spitzen 9 und 10 Schutzwände 30, 31 angebracht, die sich in das Innere des Stromschienenprofils erstrecken, wobei die Bohrungen 26, 27 unmittelbar an Seitenflächen 32, 33 der Schutzwände anschliessen. Damit bilden die Flächen 32 und 33 und Innenflächen 34, 35 der Klemmarme 7, 8 je einen Kanal 36, 37, in dem sich Wasser sammeln und durch die Bohrungen 26 und 27 abfliessen kann. Durch den nur geringen Spalt zwischen den aufeinanderzu weisenden Flächen 38 und 39 der Schutzwände 30, 31 ist sichergestellt, dass praktisch kein Wasser zu dem Fahrdraht 2 und dem Haltebereich des Fahrdrahtes an den Spitzen 9 und 10 der Klemmarme 7 und 8 gelangen kann.

Sollte Spritzwasser von unten über die Bohrungen in den Innenraum des Stromschienenprofiles gelangen, so wird dieses kurzfristig wieder ablaufen, so dass diesbezüglich kein Problem zu erwarten ist.

Aus Fig. 4 ist weiter ersichtlich, dass aufeinanderzu weisende Flächen 38, 39 der Schutzwände 31, 32 parallel zur Symmetrieachse 6 verlaufen und jeweils eine Rille 40, 41 haben, die unmittelbar in die Spitzen 9, 10 übergeht. In diese Rillen 40, 41 kann ein Teil des eingespannten Fahrdrahtes 2 aufgenommen werden. Auch ist zu erkennen, dass die von der Symmetrieachse fortweisenden Flächen 32, 33 der Schutzwände 31, 32 unter einen spitzen Winkel zur Symmetrieachse 6 verlaufen. Damit sind die Schutzwände 31, 32 keilförmig. Damit wird erreicht, dass der Spalt zwischen den beiden Schutzwänden möglichst eng ist und möglichst alles Kondenswasser in die Kanäle 35 und 36 gelangt und von dort abfliessen kann.

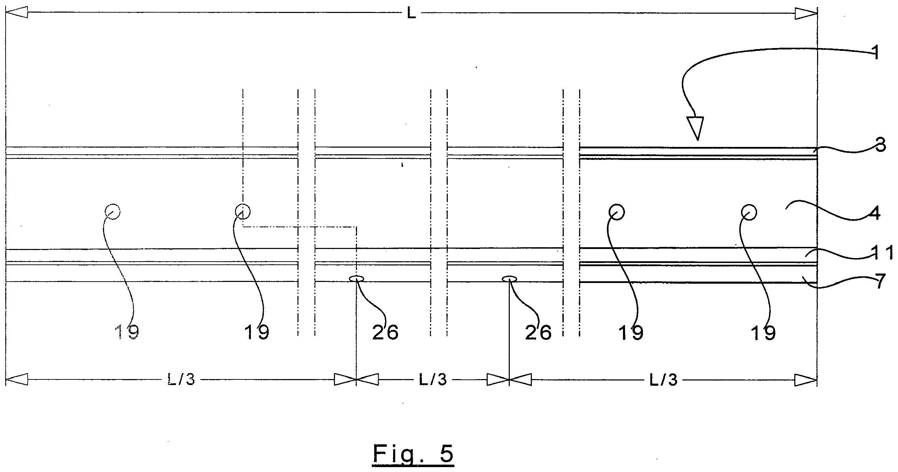

Fig. 5 zeigt eine Seitenansicht eines Stromschienenprofiles. Die Bohrungen 26 und 27 können in beliebiger Anzahl und beliebiger Anordnung längs des Stromschienenprofiles 1 verteilt angeordnet sein. Bei einer Länge der Stromschienen zwischen 10 und 12m hat sich als zweckmässig erwiesen, an jedem der Klemmarme 7 und 8 je zwei Bohrungen 27,27 vorzusehen, die zum Ende der Stromschiene und damit auch zueinander einen Abstand von ein Drittel der Gesamtlänge der Stromschiene haben. Selbstverständlich ist es auch möglich, mehr als zwei solcher Bohrungen 27,27 vorzusehen und diese an anderen Stellen anzuordnen. Ist beispielsweise anzunehmen, dass die Stromschiene im mittleren Bereich einen Durchhang hat, ist es zweckmässig, entsprechende Bohrungen an der tiefsten Stelle anzubringen. Da an den Enden der Stromschienen zur nächsten Stromschiene ohnehin ein kleiner Spalt vorhanden ist, kann Wasser dort abfliessen, beispielsweise aus den erwähnten Kanälen 36 und 37, so dass in unmittelbarer Nähe der Enden keine Bohrungen notwendig sind. Aber auch hier liegt es im Ermessen des Fachmannes und der jeweiligen Einbauverhältnisse, wo im einzelnen die Bohrungen anzubringen sind. Zur Klarstellung sei darauf hingewiesen, dass der Begriff "Bohrung" jegliche Form von Löchern, Öffnungen oder Drainagen umfasst, sowohl was deren Herstellung als auch deren Form betrifft. Sie können also beispielsweise auch durch Stanzen, Laserstrahlschneiden, Wasserstrahlschneiden oder sonstige bekannte Bearbeitungsverfahren hergestellt sein. Auch sind sie nicht auf eine Kreisform beschränkt sondern können jede geeignete Form wie zB Rechteck, Ellipse, Oval etc. haben.

Bezogen auf die Längsrichtung der Stromschiene 1 werden die Löcher 26, 27 vorzugsweise paarweise an den Klemmarmen 7, 8 vorgesehen.

## Patentansprüche

1. Stromschiene (1) zur Halterung eines Fahrdrahtes (2) mit einem langgestreckten einstückigen, in Längsrichtung geschlitztem Profil mit einem Querträger (3), von dem zwei federelastische Spannarme (4, 5) im wesentlichen senkrecht abstehen und die Spannarme (4, 5) jeweils mit einem federelastischen Klemmarm (7, 8) verbunden ist, der unter einem spitzen Winkel zu einer Symmetrieachse (6) verläuft, wobei zwischen gegenüberliegenden Spitzen (9, 10) der Klemmarme (7, 8) ein Fahrdraht (2) einspannbar ist, wobei die Klemmarme (7, 8) nahe ihrer Spitzen (9, 10) Bohrungen (26, 27) aufweisen, **dadurch gekennzeichnet,**
**dass** an den Klemmarmen (7, 8) Schutzwände (30, 31) angebracht sind, die in das Profil der Stromschiene (1) hineinragen und mit den Klemmarmen (7, 8) je einen Kanal (36, 37) bilden, wobei die Bohrungen (26, 27) unmittelbar angrenzend an Seitenwände (32, 33) der Schutzwände (30, 31) angrenzen.

2. Stromschiene (1) nach Anspruch 1, **dadurch gekennzeichnet,**
**dass** die Schutzwände (30, 31) im wesentlichen senkrecht zu den Klemmarmen (7, 8) verlaufen.

3. Stromschiene (1) nach Anspruch 1 oder 2, **dadurch gekennzeichnet,**
**dass** die Schutzwände (30, 31) an nahe der Spitzen (9, 10) der Klemmarme liegenden Enden der Klemmarme (7, 8) angebracht sind.

4. Stromschiene (1) nach einem der Ansprüche 1 bis 3, **dadurch gekennzeichnet,**
**dass** aufeinanderzu weisende Flächen (38, 39) der Schutzwände (30, 31) parallel zur Symmetrieachse (6) verlaufen und dass von der Symmetrieachse (6) abgewandte Flächen (32, 33) der Schutzwände (30, 31) unter einem spitzen Winkel zur Symmetrieachse (6) verlaufen.

5. Stromschiene (1) nach einem der Ansprüche 1 bis 4, **dadurch gekennzeichnet,**
**dass** die einanderzu weisenden Flächen (38, 39) der Schutzwände (30, 31) Rillen (40, 41) aufweisen, die unmittelbar in die Spitzen (9, 10) der Klemmarme übergehen.

6. Stromschiene (1) nach Anspruch 1, **dadurch gekennzeichnet,**
**dass** eine Mittelachse der Bohrungen (26, 27) senkrecht zur Aussenfläche der Klemmarme (7, 8) verläuft.

7. Stromschiene nach Anspruch 1 , **dadurch gekennzeichnet,**
**dass** die Bohrungen (26, 27) bezogen auf die Längserstreckung der Stromschiene (1) paarweise angeordnet sind.

8. Stromschiene nach Anspruch 1, **dadurch gekennzeichnet, dass** die Bohrungen (26, 27) in Längsrichtung der Stromschiene (1) einen Abstand von ein Drittel der Gesamtlänge der Stromschiene (1) gegenüber den Enden der Stromschiene (1) haben.

## Claims

1. Bus bar (1) for holding a contact wire (2) with a longitudinally extended, one-piece profile slotted in the longitudinal direction with a transverse carrier (3) from which two spring-elastic tensioning arms (4, 5) project substantially vertically and each tensioning arm (4, 5) is provided with a spring-elastic clamping arm (7, 8) that runs at an acute angle to an axis of symmetry (6), wherein a contact wire (2) can be clamped in between opposing tips (9, 10) of the clamping arm (7, 8), wherein the clamping arms (7, 8) comprise bores (26, 27) in the vicinity of their tips (9, 10), **characterized in that** protective walls (30, 31) are attached on the clamping arms (7, 8) which walls project into the profile of the bus bar (1) and form, with the clamping arms (7, 8), a conduit (36, 37), wherein the bores (26, 27) directly border side walls (32, 33) of the protective walls (31, 32).

2. Bus bar (1) according to claim 1, **characterized in that** the protective walls (30, 31) run substantially vertically to the clamping arms (7, 8).

3. Bus bar (1) according to claim 1 or 2, **characterized in that** the protective walls (30, 31) are attached on ends of the clamping arms (7, 8) located in the vicinity of the tips (9, 10) of the clamping arms.

4. Bus bar (1) according to one of claims 1 to 3, **characterized in that** surfaces (38, 39) of the protective walls (30, 31) directed to each other run parallel to the axis of symmetry (6) and that surfaces (32, 33) of the protective walls (30, 31), which surfaces face away from the axis of symmetry, run at an acute angle to the axis of symmetry (6).

5. Bus bar (1) according to one of claims 1 to 3, **characterized in that** the surfaces (38, 39) of the protective walls (30, 31) directed to each other comprise grooves (40, 41) that merge directly into the tips (9, 10) of the clamping arms.

6. Bus bar (1) according to claim 1, **characterized in that** a central axis of the bores (26, 27) runs vertically to the outside surface of the clamping arms (7, 8).

7. Bus bar according to claim 1, **characterized in that** the bores (26, 27) are arranged in pairs relative to the longitudinal extent of the bus bar (1).

8. Bus bar according to claim 1, **characterized in that** the bores (26, 27) have a distance of one third the total length of the bus bar (1) in the longitudinal direction of the bus bar (1) opposite the ends of the bus bar (1).

## Revendications

1. Rail d'alimentation (1) pour supporter un fil de contact (2), ayant un profilé longitudinalement allongé en une pièce et fendu longitudinalement, avec un support transversal (3) à partir duquel s'étendent sensiblement perpendiculairement deux bras de serrage élastiques (4, 5), chaque bras de serrage (4, 5) étant muni d'un bras de pince élastique (7, 8) qui s'étend selon un angle aigu vers un axe de symétrie (6), dans lequel un fil de contact (2) peut être pincé entre des arêtes (9, 10) opposées l'une à l'autre des bras de pince (7, 8), dans lequel les bras de pince (7, 8) comprennent des trous (26, 27) à proximité de leurs arêtes (9, 10), **caractérisé en ce que** des parois de protection (30, 31) sont prévues sur les bras de pince (7, 8), lesquelles parois de protection s'étendent vers l'intérieur du profilé du rail d'alimentation (1) et forment chacune un canal (36, 37) avec les bras de pince (7, 8), dans lequel les trous (26, 27) bordent directement les faces latérales (32, 33) des parois de protection (30, 31).

2. Rail d'alimentation (1) selon la revendication 1, **caractérisé en ce que** les parois de protection (30, 31) s'étendent sensiblement perpendiculairement par rapport aux bras de pince (7, 8).

3. Rail d'alimentation (1) selon l'une des revendications 1 ou 2, **caractérisé en ce que** les parois de protection (30, 31) sont disposées sur les extrémités des bras de pince (7, 8) à proximité des arêtes (9, 10) des bras de pince.

4. Rail d'alimentation (1) selon l'une quelconque des revendications 1 à 3, **caractérisé en ce que** des surfaces opposées (38, 39) l'une à l'autre des parois de protection (30, 31) s'étendent parallèlement à l'axe de symétrie (6) et **en ce que** des surfaces (32, 33) des parois de protection (30, 31) qui sont à l'opposé de l'axe de symétrie (6) se développent selon un angle aigu par rapport à l'axe de symétrie (6).

5. Rail d'alimentation (1) selon l'une quelconque des revendications 1 à 4, **caractérisé en ce que** les surfaces opposées (38, 39) l'une à l'autre des parois de protection (30, 31) comprennent des rainures (40, 41) qui se terminent directement sur les arêtes (9, 10) des bras de pince.

6. Rail d'alimentation (1) selon la revendication 1, caractérisé ce qu'un axe central des trous (26, 27) se développe perpendiculairement à la surface extérieure des bras de pince (7, 8).

7. Rail d'alimentation selon la revendication 1, **caractérisé en ce que** les trous (26, 27) sont arrangés par paires selon l'extension longitudinale du rail d'alimentation (1).

8. Rail d'alimentation selon la revendication 1, **caractérisé en ce que** les trous (26, 27) sont répartis selon la longueur du rail d'alimentation (1) à une distance égale au tiers de la longueur totale du rail d'alimentation (1) par rapport aux extrémités du rail d'alimentation (1).
